# EUROPEAN PATENT SPECIFICATION

(11) **EP 0 624 852 B1**
(45) Date of publication and mention of the grant of the patent: **22.09.1999**
(21) Application number: 94107497.3
(22) Date of filing: 13.05.1994
(51) Int. Cl.: G06K 7/10, G02B 26/10

(54) **Scanner module for symbol scanning system**
Abtastmodul für Symbol-Abtastsystem
Module de balayage pour système de balayage de symboles

(30) Priority: 14.05.1993 US 61070
(43) Date of publication of application: 17.11.1994
(73) Proprietor: SYMBOL TECHNOLOGIES, INC., Holtsville, New York 11742-1300 (US)
(72) Inventor: Bard, Simon, Stony Brook, NY 11790 (US); Strat, Askold, Patchoque, NY 11772 (US); Dvorkis, Paul, Stony Brook, NY 11790 (US)
(74) Representative: Wagner, Karl H., Dipl.-Ing.

(56) References cited:
- EP-A- 0 456 095
- WO-A-92/09133
- INSTRUMENTS AND EXPERIMENTAL TECHNIQUES, vol.19, no.1, 2 January 1976, NEW YORK pages 279 - 281 MAMAEV,V.L. AND ROZOV B.S. 'A PRECISION TWO-COORDINATE ONE-MIRROR SCANNING DEVICE'

## Description

### BACKGROUND OF THE INVENTION

### A. Field of the Invention

The present invention relates to scanning systems which "read" indicia, for example, barcode symbols, having parts with different light reflectivities and, in particular, to a scanner module for directing a beam of light in a predetermined scanning pattern at a barcode symbol and directing light reflected from the barcode symbol to an optical detector.

### B. Discussion of the Related Art

Various optical readers and optical scanning systems have previously been developed for reading barcode symbols appearing on a label, or on the surface of an article. The barcode symbol itself is a coded pattern of indicia. Generally, scanning systems electro-optically transform the graphic indicia of the symbols into electrical signals which are decoded into alphanumeric characters. The resulting characters describe the article and/or some characteristic of the article to which the symbol is attached. Such characters typically comprise input data to a data processing system for applications in point-of-sale processing, inventory control, and the like.

As used in this specification and in the following claims, the terms "symbol," "barcode," and "barcode symbol" are used to denote a pattern of variable-width bars separated by variable-width spaces. The foregoing terms are intended to be broadly construed to cover many specific forms of one- and two-dimensional patterns including alphanumeric characters, as well as, bars and spaces.

The specific arrangement of bars or elements in a symbol defines the character represented according to a set of rules and definitions specified by the code. This is called the "symbology" of the code. The relative size of the bars and spaces is determined by the type of code used, as is the actual size of the bars and spaces. The number of characters per inch represented by the barcode symbol is referred to as the density of the symbol.

To encode a desired sequence of characters, a collection of element arrangements are concatenated to form the complete symbol, with each character being represented by its own corresponding group of elements. In some symbologies, a unique "start" and "stop" character is used to indicate where the barcode symbol begins and ends. A number of different barcode symbologies presently exist. These symbologies include one-dimensional codes such as UPC/EAN, Code 39, Code 128, Codabar, and Interleaved 2 of 5.

In order to increase the amount of data that can be represented or stored on a given amount of symbol surface area, several new symbologies have been developed. One new code standard, Code 49, introduced a two-dimensional concept of stacking rows of characters vertically instead of extending symbols bars horizontally. That is, there are several rows of bar and space patterns, instead of one long row. The structure of Code 49 is described in U.S. Patent No. 4,794,239. Another two-dimensional code structure known as PDF417 is described in U.S. Patent Application Serial No. 07/461,881 filed January 5, 1990, commonly assigned to the assignee of the present invention.

Scanning systems have been disclosed, for example, in U.S. Patents Nos. 4,251,798; 4,369,361; 4,387,297; 4,409,470; 4,760,248; 4,896,026, all of which have been assigned to the assignee of the present invention. As disclosed in some of the above patents, and particularly in U.S. Patent 4,409,470, one existing scanning system comprises a hand-held, portable laser scanning head. The hand-held scanning system is configured to allow a user to manually aim a light beam emanating from the head at a target symbol.

These scanning systems generally include a light source consisting of a gas laser or semiconductor laser. The use of semiconductor devices as the light source in scanning systems is especially desirable because of their small size, low cost and low power requirements. The laser beam is optically manipulated, typically by a focusing optical assembly, to form a beam spot having a certain size at a predetermined target location. Preferably, the cross section of the beam spot at the target location approximates the minimum width between symbol regions of different light reflectivity, i.e., the bars and spaces.

In conventional scanning systems, the light beam is directed by lens or similar optical components along a light path toward a target symbol. The scanner operates by repetitively scanning the light beam in a line or a series of lines across the target symbol by movement of a scanning component such as a mirror disposed in the path of the light beam. The scanning component may sweep the beam spot across the symbol, trace a scan line across and beyond the boundaries of the symbol, and/or scan a predetermined field of view.

Scanning systems also include a sensor or photodetector which functions to detect light reflected or scattered from the symbol. The photodetector or sensor is positioned in the scanner in an optical path so that it has a field of view which extends at least across and slightly beyond the boundaries of the symbol. A portion of the light beam reflected from the symbol is detected and converted into an analog electrical signal. The pulse-width modulated digitized signal from the digitizer is decoded, based upon the specific symbology used for the symbol, into a binary data representation of the data encoded in the symbol. The binary data may then be subsequently decoded into the alphanumeric characters represented by the symbol.

Overall performance of a scanning system in reading symbols is a function of the optical capabilities of the scanning mechanism in directing a light beam at a target symbol and resolving the reflected light, and a function of the electronic subsystems which convert and process the information contained in the reflected light. A measure of the overall performance of a barcode symbol scanning system is its ability to resolve the narrowest elements of a barcode symbol and its ability to decode symbols located perhaps hundreds of inches away from the scanning system.

An important component of any scanning system is the scanner module which directs a well-defined light beam in a predetermined beam pattern at the barcode symbol and directs the reflected light from the barcode symbol to a suitable photodetector. The beam pattern that scans the barcode symbol can take a variety of forms, such as repeated line scan, standard raster scan, jittered raster scan, fishbone, petal, etc. These beam patterns are generated by controlled motions of one or more optical elements in the beam path. Typically, the optical element includes a mirror that is driven by some form of scanning motor to periodically deflect the beam through the desired beam scanning pattern. For a repeated line scan beam patter, a polygonal mirror undirectionally rotated by a simple motor can be utilized. For more complex beam patterns, more involved drive mechanisms are required.

The frequency at which the beam pattern is executed is also an important consideration. The more times a barcode symbol can be scanned in a given time period, the chances of obtaining a valid read of the barcode symbol are increased. This is particularly important when the barcode symbols are borne by moving objects, such as packages travelling on a conveyor belt.

Many applications call for a handheld scanning system, where a user aims a light beam at the barcode symbol, and the beam executes a scan pattern to read the barcode symbol. For such applications, the scanner module must be compact in order to be accommodated in a handheld package which may be pistol-shaped. Moreover, such scanners must be lightweight and structurally robust to withstand physical shock resulting from rough handling. It is also desirable that the scanner module consume minimal power during operation.

The article in "INSTRUMENTS AND EXPERIMENTAL TECHNIQUES", vol. 19, no. 1, 2 January 1976, p. 279-281, discloses a precision two-dimensional scanning device for handling graphical information in physics research. The scanning device is a mirror which ensures the deviation of a finely focused light beam by ± 12° with respect to each of its axes with a quantization of the angle reading amounting to at worst 0.2". The mirror is moved by means of a magnetoelectric drive. The one-mirror-two-dimensional scanning device comprises a precision mirror secured in a fitting and a ring which forms an equivalent point bearing (a Cardan suspension). The drive is implemented in the form of two crossed current-conducting frames with their flat sectors glued to the mirror. The frame sectors which are shaped in the form of half-rings, are moved in the air gap between the hemispherical poles of the magnetic system. This scanning device does not comprise a permanent magnet nor any flex elements.

EP-A-0 456 095 discloses a scanning arrangement including a U-shaped spring and a planar spring which are arranged to vibrate in planes orthogonal to each other. The planar spring may be made of any suitable flexible material. The U-shaped spring has a pair of arms. A mirror is fixedly mounted on one arm and a permanent magnet is mounted on the other arm. An electromagnetic coil is fixedly mounted to an upright support that is secured to a base. Upon being driven by a signal, the electromagnetic coil cyclically draws the magnet into a passage and propels the magnet out of the passage. None of the U-shaped spring and the planar spring are a torsional flex element having opposed ends for mounting the mirror and the permanent magnet at a location intermediate the opposed ends for movement in a first direction.

Further, attention is drawn to EP-A-0 574 024 which forms part of the prior art under Art. 54 (3) EPC.

### SUMMARY OF THE INVENTION

It is accordingly an object of the present invention to provide an improved optical scanner module for utilization in a scanning system for reading a data-encoded symbol. The optical scanner of the present invention is compact, lightweight, durable and efficient in construct and operation, and thus is ideally suited for portable handheld applications.

According to a first aspect of the present invention there is provided an optical scanner module for directing a light beam in a pattern to scan a bar code symbol, as set forth in claim 1.

The first flex element is desirably in a taut condition, and this may be achieved be stretching it between opposed points on a frame.

According to a second aspect of the present invention there is provided an optical scanner module for directing a light beam in a pattern to scan an encoded symbol, as set forth in claim 26.

Preferably, the holder retains the optical element and the first permanent magnet in a back-to-back relation. The first flex element, including a pair of aligned first and second flex element sections, are preferably respectively connected in taut condition between the opposed points on the holder and on the frame.

With an arrangement of this type, the selectively different torsional flexure characteristics of the first and second flex element sections provide at least some correction for what would otherwise be a slight curvature of the scan line.

According to a third aspect of the present invention there is provided an optical scanner module for directing a light beam in a pattern to scan an encoded symbol, as set forth in claim 29.

Preferred embodiments of the invnetion may be gathered from the dependent claims.

Additional features and advantages of the present invention will be set forth in the description which follows, and in part will be apparent from the description, or may be learned from practice of the invention. The objectives and advantages of the invention will be realized and attained by the apparatus particularly pointed out in the written description and claims hereof, as well as the appended drawings.

It is to be understood that both the foregoing general description and the following detailed description are exemplary and explanatory and are intended to provide further explanation of the invention as claimed.

The accompanying drawings are included to provide a further understanding of the invention and are incorporated in and constitute a part of this specification, illustrate several embodiments of the invention and, together with the description, serve to explain the principles of the invention.

### BRIEF DESCRIPTION OF THE DRAWINGS

For a full understanding of the present invention, reference may be had to the following Detailed Description taken in conjunction with the accompanying drawings, in which:
Fig. 1 is a schematic diagram of a handheld optical scanning system for reading a barcode symbol and incorporating a scanner module of the present invention;
Figs. 2 and 3 are front and side views, respectively, of a two-directional scanner module constructed in accordance with one embodiment of the present invention;
Fig. 4 is a perspective view of a two-directional scanner module constructed in accordance with a second embodiment of the present invention;
Fig. 5 is a longitudinal sectional view of a two-directional scanner module constructed in accordance with a third embodiment of the present invention;
Fig. 6 is a perspective view of a two-directional scanner module constructed in accordance with a fourth embodiment of the invention;
Fig. 7 is a perspective view of a two-directional scanner module constructed in accordance with a fifth embodiment of the invention;
Fig. 8 is a perspective view of a two-directional scanner module constructed in accordance with a sixth embodiment of the present invention;
Fig. 9 is a perspective view of a two-directional scanner module constructed in accordance with a seventh embodiment of the invention;
Fig. 10 is a longitudinal sectional view of a one-directional scanner module constructed in accordance with an eight embodiment of the present invention;
Fig. 11 is a longitudinal sectional view of a one-directional scanner module constructed in accordance with a ninth embodiment of the invention; and
Figs. 12, 13 and 14 are plan, front and side views, respectively, of a two-directional scanner module constructed in accordance with a tenth embodiment of the present invention.

Like reference numerals refer to corresponding parts throughout the several views of the drawings.

### DETAILED DESCRIPTION

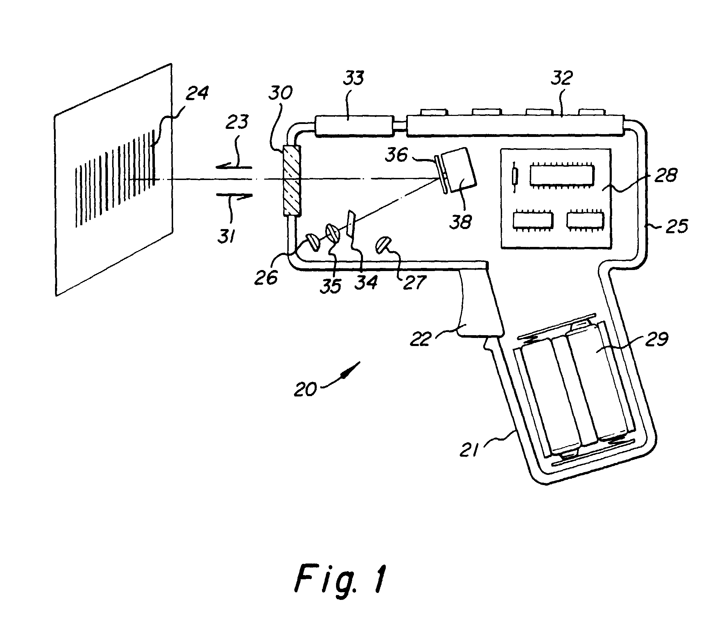

Figure 1 illustrates a portable pistol-shaped scanning system, generally indicated at 20, to which the scanner module of the present invention is particularly suited. Scanning system 20 has a pistol-grip type handle 21, and a manually-actuated trigger switch 22 which allows the user to activate a light beam 23 after the user has positioned the scanning system to a point on a symbol 24. A lightweight plastic housing 25 contains a laser light source 26, detector 27, optics and signal processing circuitry 28, and power source or battery 29.

A light-transmissive window 30 in the front end of housing 25 allows outgoing light beam 23 to exit and incoming reflected light 31 to enter. Scanning system 20 is designed to be aimed at barcode symbol 24 by a user from a position in which the scanning system is spaced from the symbol or moving across the symbol. Typically, this type of handheld scanning system is specified to operate at a range of greater than several inches. Scanning system 20 may also function as a portable computer terminal, and in such embodiments includes a keyboard 32 and a display 33, such as described in the previously noted U.S. Patent No. 4,409,470.

As further depicted in Figure 1, a beam splitter 34, or a suitable multiple lens system, may be used to focus the light beam into a scanning spot in an appropriate reference plane at the predetermined location. Light source 26, such as a semiconductor laser diode, is positioned to introduce a light beam along the axis of a lens 35, and the beam passes through partially-silvered, beam splitting mirror 34 and other lenses or beam-shaping structure as needed. The beam is reflected by an oscillating mirror 36 of a scanner module of the present invention, which is generally indicated at 38. The scanner module is energized when trigger 22 is pulled. If the light produced by source 26 is marginally visible, an aiming light may be included in the optical system. The aiming light, if needed, produces a visible-light spot which may be fixed or scanned like the laser beam. A user employs this visible light to aim the scanning system at the symbol before pulling the trigger.

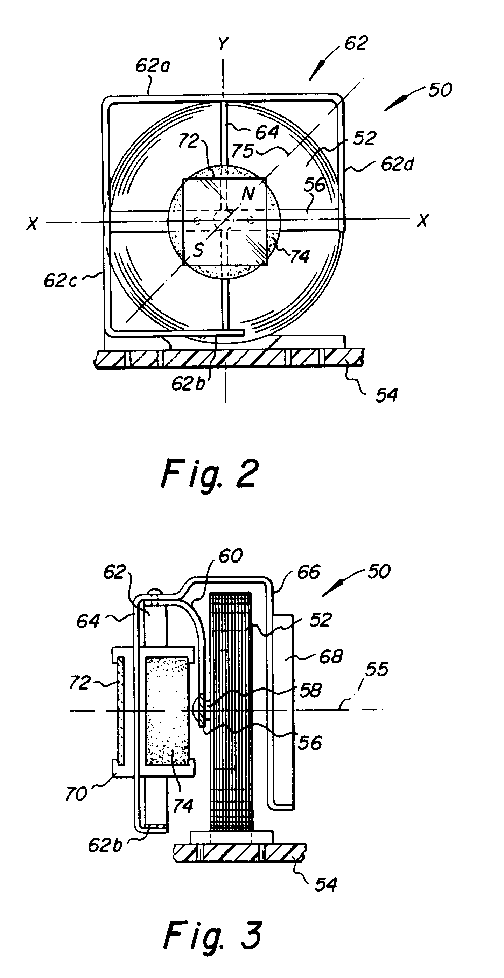

In the embodiment of the invention seen in Figs. 2 and 3, a scanner module, generally indicated at 50, includes an electromagnetic coil 52 mounted in vertical orientation on a suitable stationary base, such as a circuit board 54, to orient a horizontal magnetic axis 55 coincident with the coil centerline. A horizontal flex element 56 is affixed at opposite ends to standoff mounts 58 attached at diametrically opposed locations on coil 52. This mounting of flex element 56 is such as to place it in a taut condition. The taut flex element may be formed of any suitable strip material, such as polyamide or polyester plastic film. KAPTON® and MYLAR® plastic films marketed by Dupont Corporation are highly suitable materials for taut band element 56.

Affixed to taut band element 56 at a location centered on magnetic axis 55 is the lower end of a bracket 60, whose upper end is fastened to an upper horizontal side 62a of a generally rectangular frame 62. This frame, which is mounted in suspension by bracket 60, includes a short, lower horizontal side 62b integrally joined with side 62a by a full length left vertical side 62c and a short right vertical side 62d depending from the right end of full length upper side 62a. A vertical flex element 64 is secured at its upper end to a mid-length point of frame side 62a and at its lower end to frame side 62b. Frame 62 is formed of a suitable metallic spring stock, such as beryllium copper, such that it can stretch flex element 64 to a taut condition. Suitable materials for flex element 64 are beryllium copper and steel wire. As seen in Fig. 3, taut band element 56 also cantilever mounts, via bracket 60, a secondary L-shaped bracket 66 having a vertical segment depending rearwardly of coil 52 and serving to mount a mass 68 for counter-balancing the mass of the frame and a mirror-magnet assembly to be described. By proper selection of mass 68, torsional forces on taut band element 56 can be reduced essentially to zero while the scanning module is in a quiescent state.

Still referring to Figs. 2 and 3, a carrier 70 is affixed to taut wire element 64 in a position centered on magnetic axis 55 of coil 52. This carrier mounts a mirror 72 forwardly of taut wire element 24 and a permanent magnet 74 rearwardly of the taut wire element. The permanent magnet is in the form of a cube and is polarized along a magnetic axis 75 oriented at an oblique angle, e.g. 45°, with respect to indicated X and Y axes. Thus, for example, permanent magnet 74 is polarized such that north pole N is generally located at the upper right corner and south pole S at the lower left corner of the magnet cube, as seen in Fig. 2.

It is seen from the foregoing description that mirror 72 can oscillate about the Y axis through taut wire element 64 with torsional flexure of this flex element to deflect a laser beam in an X scanning direction. Also, the mirror can oscillate about the X axis through taut band element 56 with torsional flexure of this flex element to deflect the laser beam in a Y scanning direction. With the magnetic axis 75 of the single permanent magnet 74 obliquely oriented, X and Y mirror scanning motions can be driven by energizing of the single electromagnetic coil 52.

In accordance with a feature of the invention, by utilizing a flex element in the form of taut wire element 64 and controlling the mass of the mirror-magnet assembly, the resonant frequency for X scanning motion can be established at a relative high frequency, e.g., 500 Hz. Then, by utilizing a flex element in the form of taut band element 56 with the considerably greater mass supported by this flex element, as compared to taut wire element 64, a resonant frequency for Y scanning motion can be established at a considerably lower frequency, e.g., 20 Hz. By virtue of this wide separation between resonant frequencies, if the electromagnetic coil is energized with an AC current of 500 Hz, the interaction of the magnetic fields of the coil and permanent magnet 74 produces mirror oscillations essentially only about the Y axis and thus beam scanning motion only in the X direction. On the other hand, when the coil is energized with an AC current of 20 Hz, the interaction of the coil and magnet fields produces mirror oscillation essentially only about the X axis through taut band element 56, and thus beam scanning motion only in the Y direction. However, when electromagnetic coil 52 is driven with superimposed 500 Hz and 20 Hz AC currents, mirror oscillates about both the X and Y axes to produce beam scanning motion components in both the X and Y directions. Such current superimposition can be achieved by producing a 20 Hz amplitude modulation of a 500 Hz AC drive current. Variable modulation of this drive current in amplitude and/or frequency can then produce a variety of laser beam scan patterns, including those patterns illustrated in application Serial No. 07/981,448, cited above. The disclosure of this application, as well as the disclosures of the other cited applications, are incorporated herein by reference.

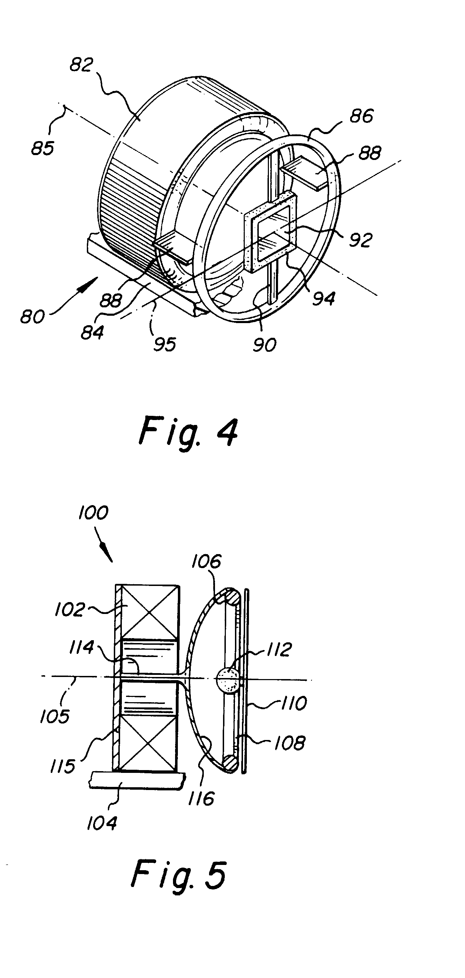

The embodiment of the invention seen in Fig. 4 comprises a two-directional scanner module, generally indicated at 80, which includes an electromagnetic coil 82 mounted to stationary base 84 in vertical orientation to establish a horizontal magnetic axis 85. A ring 86 is mounted to the electromagnetic coil by a pair of flex elements in the form of leaf springs 88 at diametrically opposed three and nine o'clock positions. These leaf springs lie in a horizontal plane and thus are flexible in the vertical or Y direction. A vertically oriented flex element 90, in the form of a band of plastic film material or a wire, as utilized in the embodiment of Figs. 2 and 3, is fixed at one end to ring 86 at a twelve o'clock position and at its other end to the ring at a six o'clock position. The band is stretched tight such as to function as a taut flex element.

A mirror 92 is mounted to the front side of taut flex element 90, and a permanent magnet 94 is mounted to the back side of the taut band element. The mounting of the mirror and permanent magnet is centered on horizontal magnetic axis 85. Permanent magnet 94 is magnetized in the horizontal direction to establish a magnetic axis 95 which is normal to the magnetic axis 85 of electromagnetic coil 82.

When the electromagnetic coil is energized with an AC current, the magnetic fields of the electromagnetic coil and permanent magnet interact to produce forces causing the mirror-magnet assembly to oscillate in the horizontal direction as taut band element 90 flexes in torsion. A laser beam impinging on the mirror is thus deflected in a horizontal or X scanning direction. The same magnetically induced forces that generate X direction scanning motion attempt to produce a similar motion of ring 86. Due to the stiffness of the leaf spring suspension mounting of the ring, the horizontal component of the magnetically induced forces can not produce horizontal oscillation of the ring. However, tensile and compressive stresses are induced in leaf springs 88, which produce vertical force components effective to create a vertical moment causing the ring to move in the vertical direction. The frequency of the up and down oscillation in the Y direction is determined by the mass of the ring assembly (ring, taut flex element, mirror and permanent magnet) and characteristics of the leaf springs, e.g., elasticity, dimensions, etc.

It is thus seen that, by virtue of the flexible mounting of the ring assembly to accommodate vertical motion, scanner module 80 is capable of bidirectional, e.g., X and Y, oscillation to produce raster scanning of a laser beam deflected by mirror 92. Permanent magnet 94 is illustrated as having a cubic shape with a minimized horizontal dimension to reduce its inertial moment about the Y axis. Thus horizontal oscillations of the mirror can be induced with less drive current power applied to the electro-magnetic cord.

In the embodiment of the invention seen in Fig. 5, a scanner module, generally indicated at 100, includes an electromagnetic coil 102 vertically mounted to a stationary base 104 to establish a horizontally oriented magnetic axis 105. As in scanner module 80 of Fig. 4, scanner module 100 utilizes an ring assembly including a ring 106 mounting a vertical taut band element 108 which, in turn, mounts in back-to-back relation a forward mirror 110 and a rearward permanent magnet 112 in centered relation with magnetic axis 105. Again, permanent magnet 112 is polarized in the horizontal direction to orient a magnetic axis (not shown) orthogonal to magnetic axis 105. As a modification to scanner module 80 of Fig. 4, scanner module 100 utilizes a single flexible member to mount the ring assembly. Thus, as seen in Fig. 5, a flex member 114, flexible in the vertical direction and stiff in the horizontal direction, is affixed at a rearward end to an upright extension 115 of base 114 located to the rearward side of electromagnetic coil 102. Flex member 114 extends forwardly through the open center of the electromagnetic coil 102 in aligned relation with magnetic axis 105 to a frontal end to which the ring assembly is mounted by way of bracketing 116.

As in the case of scanner module 80 of Fig. 4, AC current drive of electromagnetic coil 102 of scanner module 100 in Fig. 4 produces horizontal oscillation of mirror 110 with torsional flexure of taut band element 108 and the ring assembly oscillates in the vertical direction on the cantilever mounting provided by central flex member 114. Thus, scanner module 110 also provides bidirectional, X and Y raster scanning motion of a laser beam utilizing a single electromagnetic coil and a single permanent magnet.

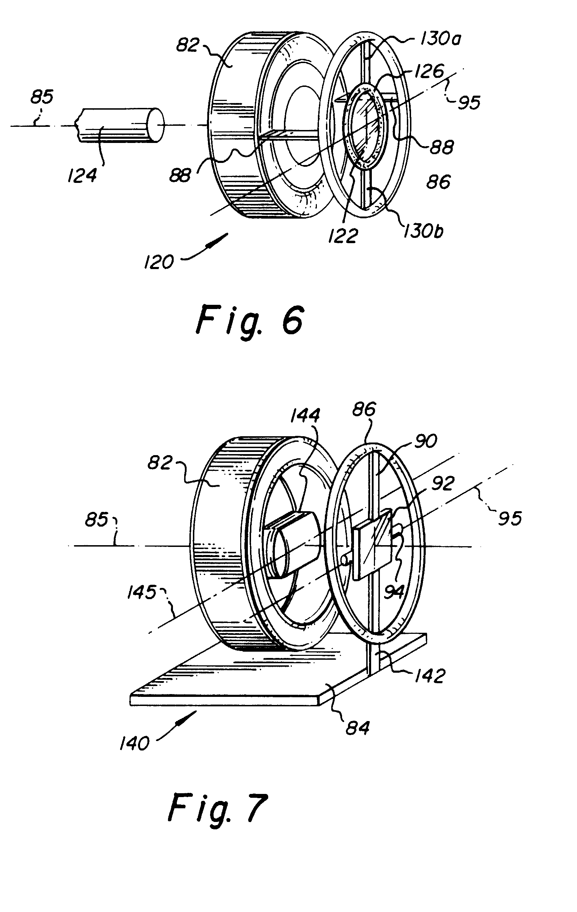

Rather than utilizing an oscillating mirror to produce laser beam scanning, as in the scanner module embodiments described above, laser beam scanning can be effected utilizing an oscillating lens. Thus, as seen in Fig. 6, a scanner module, generally indicated at 120, utilizes the same ring assembly suspension mounting approach of scanner module 80 of Fig. 4. Thus, ring 86 is mounted to vertically oriented electromagnetic coil 82 by a pair of leaf springs 88 at the three and nine o'clock positions. The ring, in turn, mounts a lens 122 whose optical center is aligned with the magnetic axis 85 of electromagnetic coil 82. A laser 124 is positioned to emit a beam along magnetic axis 85 and through lens 122. So as not to obstruct the laser beam, the lens is mounted along its peripheral edge to a ring-shaped permanent magnet 126 and the magnet, in turn, is mounted to ring 86 by a pair of vertically aligned, short, taut band elements 130a and 130b. Taut band element 130a is connected between the twelve o'clock positions of the ring and ring magnet, and taut band element 130b is connected between the six o'clock positions of the ring and ring magnet. The permanent ring magnet is polarized in the horizontal direction, as illustrated, to establish a magnetic axis 95 orthogonal to magnetic axis 85. AC drive current applied to the electromagnetic coil produces X and Y directional oscillations of lens 122, as in the case of mirror 82 in Fig. 4, to achieve pre-objective scanning of the laser beam in X and Y directions.

Two-directional scanning is also achieved by the scanner module, generally indicated at 140 in Fig. 7. In this embodiment of the invention, an electromagnetic coil 82 is again mounted in upright orientation to a stationary base 84. As in the case of scanner module 80 (Fig. 4), a ring assembly is utilized, composed of a ring 86 mounting a vertically oriented taut band element 90, with a frontal mirror 92 and reward permanent magnet 94 centrally mounted to the taut band element. However in this embodiment, the ring assembly is mounted in vertical orientation directly to base 84 by a single, vertical flex member 142 which allows the ring assembly to rock fore and aft generally along magnetic axis 85 of the electromagnetic coil 82. This rocking motion is seen to produce oscillatory motion of mirror 92 in the vertical or Y direction in the manner provided by the horizontal flex mounting elements of Figs. 4-6.

To induce this vertical oscillation of mirror 92, a second stationary electromagnetic coil 144 is situated within the central opening of electromagnetic coil 82 with its magnetic axis 145 oriented perpendicular to axis 85 of coil 82. This magnetic axis 145 is parallel to magnetic axis 95 of permanent magnet 94. Thus, when electromagnetic coil 144 is driven by an AC current, permanent magnet 94 is alternately attracted toward and repelled from the coil 144. The ring assembly is thus rocked fore and aft on flex mount 142, and vertical components of oscillation of mirror 92 are produced. As in the case of the embodiments of Figs. 4-6, horizontal or X direction oscillation of the mirror is induced by AC current energization of electromagnetic coil 82.

It will be appreciated that flex mount 142 may be implemented as an extension of taut band element 90. Also, electromagnetic coil 144 may be provided as a continuation of the winding for electromagnetic coil 82, which is wound on a horizontal cross member of a bobbin for coil 82. As an additional feature, scanner module 140 of Fig. 7 possesses two resonances for oscillations in the horizontal or X direction. Torsional oscillation on taut band element 90 will resonate at a high frequency, while torsional oscillation on flex member 142 will resonant at a low frequency.

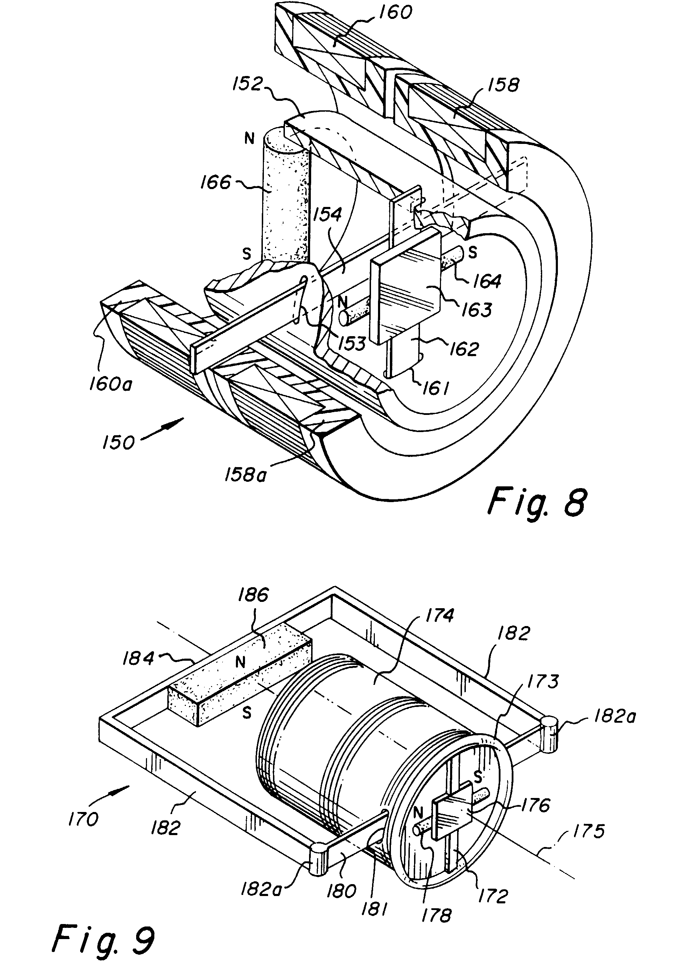

Turning to Fig. 8, another embodiment of the invention is illustrated in the form of a scanner module, generally indicated at 150, which includes a cylinder 152, formed of a non-magnetic material, which is provided with horizontally opposed slits 153 through with an elongated flex element 154 extends. This flex element, which is in the form of a strip of flexible material, such as spring steel, has opposed ends fixedly mounted between bobbins 158a and 160a on which an X deflection electromagnetic coil 158 coil and a Y deflection electromagnetic coil 160 are respectively wound.

Cylinder 152 is also formed with forwardly located, vertically opposed slits 161 in which ends of an elongated vertical flex element 162 are captured. This flex element 162 is typically formed of the same material as flex element 156. A mirror 163 is mounted to the front side and a permanent magnet 164 is mounted to the back side of flex element 162 in positions centered on the centerline of cylinder 152, which coincides with the magnetic axes of electromagnetic coils 158 and 160. A second, vertically oriented permanent magnet 166 is mounted to the rearward end of cylinder 152. As illustrated, permanent magnet 166 is polarized in the vertical direction and is positioned such that its magnetic field, having a vertically oriented axis, can interact with the magnetic field produced by electromagnetic coil 160, whose axis is horizontal and thus orthogonal thereto. Permanent magnet 164 is polarized in the horizontal direction and is positioned such that its magnetic field can interact with the orthogonally related magnetic field produced by electromagnetic coil 158.

By virtue of this construction of scanner module 150, it is seen that AC drive current applied to electromagnetic coil 158 produces a magnetic field that interacts with the magnetic field of permanent magnet 164 to produce horizontal oscillations of mirror 162, and thus laser beam scanning in the X direction, as vertical flex element 162 flexes in torsion. AC current drive of electromagnetic coil 160 then produces a magnetic field which interacts with the magnetic field of permanent magnet 166 to produce vertical oscillations of the mirror and laser beam scanning in the Y direction as horizontal flex element 154 flexes in torsion. Thus, a bidirectional raster scan of the laser beam is achieved. Since the mass supported by horizontal flex element 154 is greater that the mass supported by vertical flex element 162, the resonant frequency of horizontal oscillations is higher than the resonant frequency of vertical oscillations. It will be appreciated that, by providing separate horizontal and vertical coil-magnet sets, X and Y directional scanning can be readily controlled to create a wide variety of laser beam scan patterns.

In the embodiment of the invention seen in Fig. 9, a scanner module, generally indicated at 170, includes a taut band element 172 affixed in vertical orientation to the forward end of a bobbin 173 of an electromagnetic coil 174. Affixed to the front side of this taut band element is a mirror 176, and a permanent magnet 178 is affixed to the back side thereof. An elongated flex member 180 extends through horizontally opposed slits 181 in bobbin 173 with opposite ends anchored to the front ends 182a of longitudinally extending arms 182 of a U-shaped, stationary bracket having a transverse base 184 interconnecting the rearward ends of the arms. A permanent magnet 186 is secured to the bracket base and is polarized in the vertical direction to establish a vertically oriented magnetic axis. Permanent magnet 178 is polarized in a transverse or horizontal direction to establish a magnetic axis that is orthogonal to both magnetic axes of permanent magnet 186 and to the longitudinal magnetic axis 175 of electromagnetic coil 174. The mounting position of the mirror-magnet assembly on taut band element 172 is centered on electromagnetic coil axis 175.

In operation, upon AC current energization of electromagnetic coil 174, mirror 176 is oscillated in the horizontal direction as the result of the interaction of the orthogonally related magnetic fields of the electromagnetic coil and permanent magnet 178. This oscillation in the X direction is accommodated by torsional flexure of taut band element 172. Concurrently, the bobbin mounted mirror oscillates in the vertical direction by virtue of the interaction of the orthogonally related magnetic fields of the electromagnetic coil and permanent magnet 186, as permitted by torsional flexure of flex member 180. Thus bidirectional laser beam scanning motion is produced utilizing a pair of permanent magnets and a single electromagnetic coil. Again resonance for oscillation in the X direction is at a higher frequency than the resonant frequency for oscillation in the Y direction. It will be appreciated that the coil winding on bobbin 122 may be a split coil with forward and rearward coil portions driven separately to produce the desired horizontal and vertical components of oscillatory mirror motion for a variety of bidirectional scan patterns executed by a laser beam.

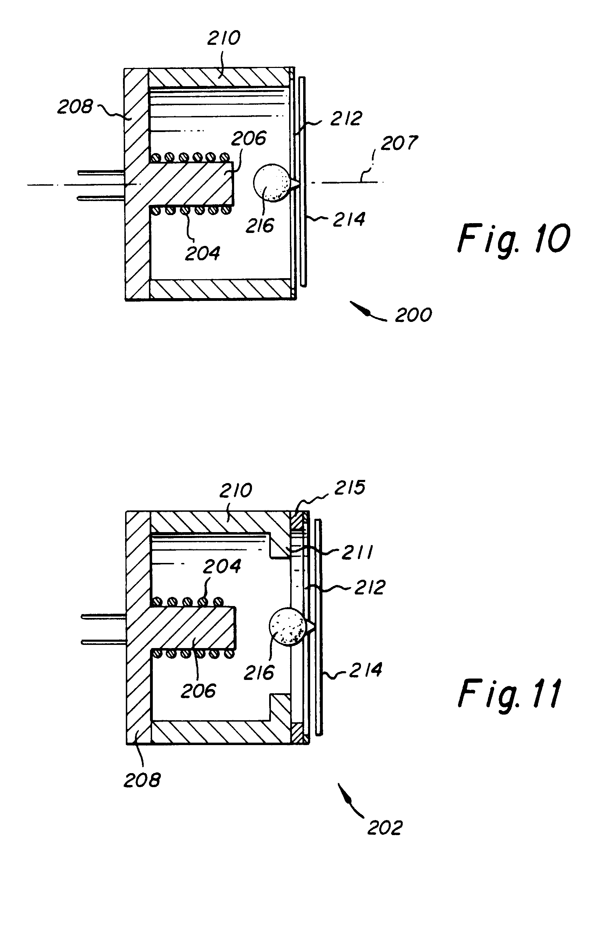

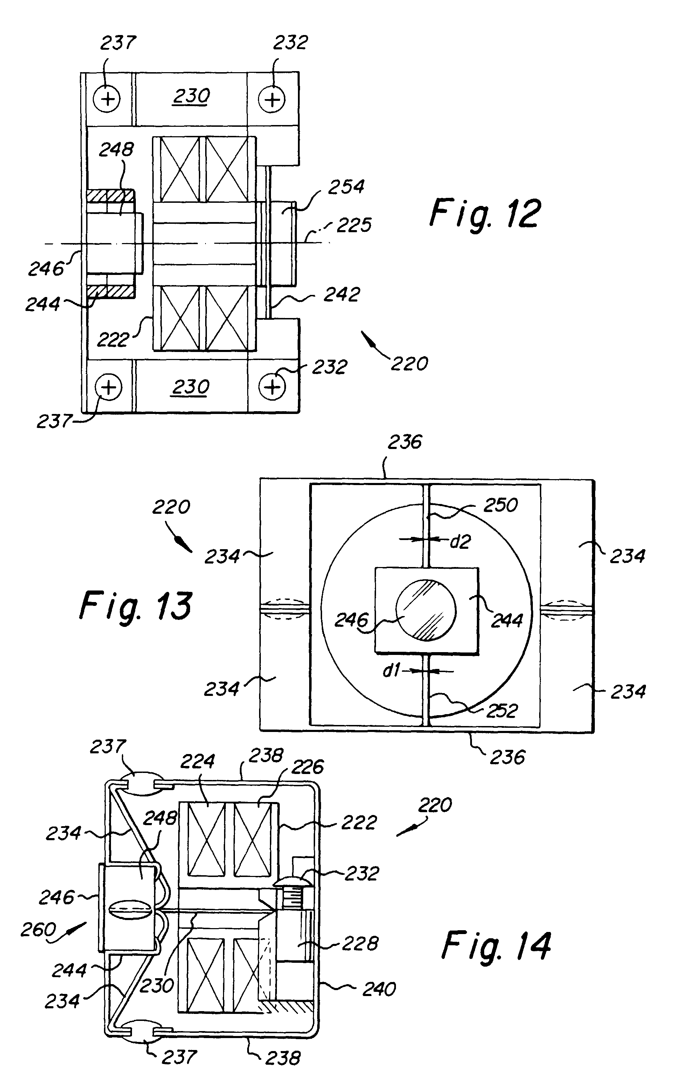

In the embodiments of the invention described above, the electromagnetic coils are of the air core type. In the scanner module embodiments 200 and 202 illustrated in Figs. 10 and 11, respectively, an electromagnetic coil 204 is wound on a metallic core 206 of high magnetic permeability. The core is mounted to or integrally formed with a circular base 208 of like material. A cylinder 210 of magnetically permeable metal is joined at its rearward end to base 208 in coaxial relation with core 206. An elongated flex member 212 in the form of a taut band or taut wire element is affixed to span the forward end of cylinder 210 from twelve to six o'clock positions. Affixed to this vertical flex element is a frontal mirror 214 and a rearward permanent magnet 216 in positions centered on centerline 207 of core 206. The permanent magnet is polarized in a horizontal direction into and out of the drawing sheet.

It is seen that a closed magnetic path is provided to concentrate the magnetic filed generated by AC current energization of electromagnetic coil 204 in the air gaps between the forward ends of the core and cylinder. The coupling efficiency of the magnetic fields of the permanent magnet and electromagnetic core is thus enhanced. The interaction of these magnetic fields is increased to generate enhanced torsional forces producing horizontal or X direction oscillations of mirror 214. Consequently, scanner modules 200 and 202 require less power to oscillate the mirror, a significant advantage in portable applications. Fig. 11 illustrates that the forward end of cylinder 210 may be turned radially inward to present an annular pole piece 211 in closer proximity to permanent magnet 216 and core 206. Also, Fig. 11 illustrates that flex member 212 may be mounted to a ring 215, of a rigid plastic for example, and ring then affixed to the front end of cylinder 210. This standoff mounting provides clearance between the flex member and pole piece 211, as well as simplifying manufacturing and assembly procedures.

In the embodiment of the invention seen in Figs. 12-14, a scanner module, generally indicated at 220, includes a stationary dual bobbin 222 on which are wound a forward electromagnetic coil 224 and a rearward electromagnetic coil 226. The magnetic axes of these coils are indicated at 225. A pair of transversely aligned, fixed mounting posts 228, positioned in flanking relation with bobbin 222, respectively serve to anchor the rearward ends of a pair of flex elements 230 via clamping screws 232. The front ends of these flex elements are clamped between horizontally turned inner foot portions of vertically oriented pairs of Z-shaped front frame members 234, with each vertical pair being interconnected by upper and lower cross frame members 236 as seen in Fig. 13. Horizontally turned outer foot positions of front frame members 234 are secured, as indicated at 237, to U-shaped frame members having forwardly extending upper and lower arms 238 joined by vertically oriented, rear frame members 240. The transversely spaced rear frame members are interconnected by a cross frame member 242 at a position vertically centered with magnetic axis 225.

A holder 244 is provided to carry a mirror 246 at a front end and a permanent magnet 248 at a rear end. As best seen in Fig. 13, a first vertically oriented flex element 250 is anchored at its upper end to upper cross frame member 236 and anchored at its lower end to the upper side of holder 244. A second vertically oriented flex element 252 is anchored at its upper end to the lower side of holder 244 and anchored at its lower end to lower cross frame 236. The flex elements 250 and 252 mount holder 244 such that mirror 246 and permanent magnet 248 are centered on magnetic axis 225. A second permanent magnet 254 is mounted to rear cross frame member 242 also in a position centered on magnetic axis 225. The weight of permanent magnet 254 is selected to counterbalance the weight of the mirror-magnet holder assembly and the frame, such that the components are cantilever mounted to posts 228 in the balanced positions seen in Fig. 14. Also, the U-shaped frames and their frontal interconnecting Z-shaped frame members are formed of spring metal strips effective to stretch horizontal flex elements 230 and vertical flex elements 250 and 252 into taut conditions.

In operation, when electromagnetic coil 224 is driven by an AC current, its magnetic field interacts with the magnetic field of permanent magnet 248, polarized in the horizontal direction, to produce oscillations of mirror 246 in the horizontal or X direction as flex elements 250 and 252 flex in torsion. Energization of electromagnetic coil 226 with AC current generates a magnetic field which interacts with the magnetic field of permanent magnet 254, polarized in the vertical direction, to produce seesaw or rocking motion of the entire frame generally in the vertical or Y direction. Mirror 246 thus also rocks in vertical oscillation to deflect an incident laser beam in the Y scanning direction. Scanner module 220 thus operates as a bidirectional scanner module capable of providing complex laser beam raster scanning.

It is well understood that, because a laser beam 260 (illustrated in Fig. 14) must necessarily strike a mirror 246 at an oblique angle to avoid reflection back on itself, a beam scan line in the X direction has a slight degree of curvature. The scanner module 220 is capable of correcting scan line curvature. As seen in Fig. 13, the dimensions d1 and d2 of vertical flex elements 252 and 250 respectively, are differentially selected to compensate the mirror motions near the extremes of its horizontal oscillations and thus correct for X scan line curvature.

It will be apparent to those skilled in the art that various modifications and variations can be made in the optical scanner module of the present invention without departing from the scope of the invention as defined by the claims. Thus, it is intended that the present invention cover the modifications and variations of this invention.

## Claims

1. An optical scanner module for directing a light beam in a pattern to scan a bar code symbol, the scanner module comprising:
an assembly including a light beam-directing optical element (72, 92, 110, 122, 163, 176, 246), permanent magnet means (74, 94, 112, 126, 164, 178, 248), and a first elongated torsional flex element (64, 90, 108, 130, 130a, 130b, 162, 172, 250), having opposed ends, for mounting said optical element and said permanent magnet means at a location intermediate said opposed ends for movement in a first direction;
a second flex element (56, 88, 114, 142, 154, 180, 230) mounting the assembly for movement in a second direction; means for mounting said second flex element; and electromagnetic coil means (52, 82, 158, 160, 174, 224, 226) for receiving current to generate a magnetic field for interaction with a magnetic field of said permanent magnet means.

2. The optical scanner module defined in claim 1, wherein said electromagnetic coil means (52,82,158,160,174, 224,226) receives an AC drive current to generate a magnetic field for interaction with the magnetic field of the permanent magnet to produce oscillatory motions of the optical element in the first and second directions resulting in bidirectional scanning movement of the light beam, the first and second directions being orthogonally related.

3. The optical scanner module defined in claim 1 or claim 2, wherein the assembly further includes a frame (62,86,106,236) and wherein the first flex element is an elongated member (64,90,108,130,172,250) having opposite ends affixed to opposed points on the frame to place the first flex element in a taut condition.

4. The optical scanner module defined in claim 3, wherein the optical element and the permanent magnet (74,94,112,178,248) are mounted on opposite sides of the first flex element (64,90,108,130,172,250) at a central location between the opposite ends of the first flex element.

5. The optical scanner module defined in any one of the preceding claims, wherein oscillatory motion of the optical element (72,92,110,122,163,176,246) in the first direction is rotational motion about an axis defined by the first flex element (64, 90, 108, 130, 162, 172, 250), the first direction rotational motion being accommodated by torsional flexure of the first flex element.

6. The optical scanner module defined in claim 3, wherein the assembly is cantilever-mounted by a single second flex element (114) extending through a central opening of the electromagnetic coil and having a free end affixed to the frame (106).

7. The optical scanner module defined in claim 3, wherein the assembly is cantilever-mounted by a pair of the first flex elements (88) having free ends affixed to the frame (86) at locations equiangularly spaced from the opposite ends of the first flex element (90).

8. The optical scanner module defined in any one of the preceding claims wherein the optical element is a mirror (72,92,110,163,176,246).

9. The optical scanner module defined in any one of claims 1 to 7 wherein the optical element is a lens (122).

10. The optical scanner module defined in claim 3, wherein the means for mounting the second flex element is a base (84), and the second flex element (142) includes a first end affixed to the base and a second end affixed to the frame (86).

11. The optical scanner module defined in claim 3, wherein the means for mounting the second flex element is a base (84), and the second flex element (142) is constituted by an extension of the first flex element (90) beyond the frame (86).

12. The optical scanner module defined in claim 10, wherein the electromagnetic coil is a first electromagnetic coil (82), the optical scanner module further including a second electromagnetic coil (144) positioned to establish a magnetic axis parallel to a magnetic axis of the permanent magnet (94) and orthogonal to a magnetic axis of the first electromagnetic coil (82), whereby energization of the second electromagnetic coil (144) with an AC drive current produces alternating repulsive and attractive forces on the assembly to oscillate the optical element (92) in the second direction with flexure of the second flex element (142).

13. The optical scanner module defined in claim 3, wherein the frame is formed of spring material biased to stretch the first flex element to the taut condition.

14. The optical scanner defined in claim 3, wherein the means for mounting the second flex element includes means for stretching the second flex element to a taut condition and includes a bracket (60) for cantilever-mounting the assembly to the second flex element (64).

15. The optical scanner defined in claim 14, wherein the means for mounting the second flex element further includes a counterweight (68) positioned to counterbalance the weight of the assembly to minimize rotational movement about an axis defined by the second flex element (64), whereby oscillatory motion of the optical element (72) in the second direction is rotational about the axis defined by the second flex element (64) accommodated by torsional flexure of the second flex element.

16. The optical scanner module defined in claim 3, wherein the optical element is a lens (122), the permanent magnet is a ring magnet (126) surrounding and supporting the lens, and the first flex element includes a pair of aligned flex element sections (130a,130b) connected between respective diametrically opposed points on the ring magnet and the frame (86), a path for the light beam through the lens extending through a central opening of the electromagnetic coil (82).

17. The optical scanner module defined in claim 3, wherein the permanent magnet is polarized to establish a magnetic axis oriented parallel to one of the first and second directions.

18. The optical scanner module defined in claim 5, wherein the permanent magnet (74) is polarized to establish a magnetic axis at an oblique angle relative to both of the first and second directions.

19. The optical scanner module defined in claim 1, the scanner module being characterised by: a first permanent magnet (164,178,248) for establishing a first magnetic field having a first magnetic axis; said first elongated flex element (162,172,150) mounting the optical element and the first permanent magnet at a location intermediate the opposed ends; means for mounting the opposed ends of the first flex element (162,172,250); a second permanent magnet (166,186,254) mounted by the mounting means and establishing a second magnetic field having a second magnetic axis; said second flex element (154,180,230) being elongated and having fixedly mounted opposed ends, for mounting the first mounting means at a location intermediate the opposed ends; and said electromagnetic coil means (158,160,174,224,226) receiving an AC drive current to establish a third magnetic field having a third magnetic axis orthogonal to the first and second magnetic axes, whereby interaction of the first, second and third magnetic fields generates oscillatory motions of the optical element in a first direction about a first axis defined by the first flex element and in a second direction about a second axis defined by the second flex element to produce bidirectional scanning movement of the light beam.

20. The optical scanner defined in claim 19, wherein the electromagnetic means includes first and second electromagnetic coils, the first electromagnetic coil (158,224) receiving a first AC drive current to establish one third magnetic field for interaction with the first magnetic field to produce oscillatory motion of the optical element in the first direction and the second coil (160,226) receiving second AC drive current to establish another third magnetic field for interaction with the second magnetic field to produce oscillatory motion of the optical element in the second direction.

21. The optical scanner module defined in claim 20, wherein the mounting means is in the form of a cylinder (152) mounted by the second flex element (154) within a central open of the first and second electromagnetic coils (158,160).

22. The optical scanner module defined in claim 21, wherein the opposed ends of the second flex elements are fixedly mounted to annular bobbins on which the first and second electromagnetic coils (158,160) are wound.

23. The optical scanner module defined in any one of claims 20 to 22 in which the electromagnetic coil means are situated between the first and second magnets.

24. The optical scanner module defined in claim 23, wherein the first mounting means is provided by a bobbin on which a coil of the electromagnetic coil means is wound.

25. The optical scanner module defined in claim 24, wherein the second mounting means is a frame for fixedly mounting the second permanent magnet and the end portions of the second flex element.

26. An optical scanner module for directing a light beam in a pattern to scan an encoded symbol, the scanner module comprising: an optical element (246) for directing the light beam; a first permanent magnet (248) for establishing a first magnetic field; a holder for retaining the optical element (246) and the first permanent magnet (248) in a frame; a first flex element including a pair of aligned first (250) and second (252) flex element sections respectively connected between opposed points on the holder and the frame; the first and second flex element sections having selectively different torsional flexure characteristics, and an electromagnetic coil (224,226) for receiving an AC drive current to establish a second magnetic field, whereby interaction of the first and second magnetic fields produces oscillatory motion of the optical element.

27. The optical scanner module defined in claim 26, further comprising: a pair of elongated second flex elements (230) arranged in parallel, spaced relation and having corresponding first ends anchored to stationary mounting means and corresponding second ends anchored to the frame; a second permanent magnet (254) mounted to the frame in a position to counter-balance the optical element (246) and the first permanent magnet (248), the second permanent magnet establishing a third magnetic field interacting with the second magnetic field to produce oscillatory motion of the optical element in a second direction orthogonal to the first direction, as accommodated by flexure of the second flex elements, thereby providing bidirectional scanning of the light beam.

28. The optical scanner module defined in claim 26, wherein the frame is formed of a spring material biased to stretch the first (250) and second (252) flex element sections into taut conditions.

29. An optical scanner module for directing a light beam in a pattern to scan an encoded symbol, the scanner module comprising: an optical element (214) for directing the light beam; a permanent magnet (216) for producing a first magnetic field; an elongated flex element (212) having opposed ends, for mounting the optical element and the permanent magnet at a location intermediate the opposed ends; a cylinder (210) having an open end and a closed end, the cylinder being formed of magnetically permeable material, the opposed ends of the flex element being affixed to the cylinder such that the flex element spans the open end of the cylinder; a magnetic core (206) extending from the closed end toward the open end of the cylinder to present a free end proximate the permanent magnet; and a coil (204) wound about the core (206) for receiving an AC drive current to produce magnetic flux flowing in the cylinder and the core and a second magnetic field in air gaps between the core free end and the cylinder open end, whereby interaction of the first and second magnetic fields generates oscillatory motion of the optical element as the flux element flexes in torsion to produce line scanning motion of the light beam.

30. The optical scanner module defined in claim 29, wherein the flex element (212) is mounted to the open end of the cylinder (210) in a taut condition.

31. The optical scanner module defined in claim 29 or claim 30, which further comprises a stand-off mounting ring (215) to which the opposed ends of the flex element (212) are fixedly secured, the ring being attached to the open end of the cylinder (210).

32. The optical scanner module defined in claim 31, wherein the cylinder (210) further includes an annular pole piece (211) extending radially inwardly from the open end of the cylinder.

33. A handheld optical scanning system incorporating an optical scanner module as claimed in any one of the preceding claims.

## Patentansprüche

1. Optisches Scannermodul zum Richten eines Lichtstrahls in einem Muster, um ein Strichcodesymbol abzutasten, wobei das Scannermodul folgendes aufweist:
einen Aufbau, einschließlich einem Lichtstrahl richtenden optischen Element (72, 92, 110, 122, 163, 176, 246), Permanentmagnetmittel (74, 94, 112, 126, 164, 178, 248) und einen ersten verlängerten torsionsbiegbaren Element (64, 90, 108, 130, 130a, 130b, 162, 172, 250) mit gegenüberliegenden Enden zum Anbringen des optischen Elements und der Permanentmagnetmittel an einem Ort, der sich zwischen den gegenüberliegenden Enden befindet, und zwar zur Bewegung in einer ersten Richtung;
ein zweites biegbares Element (56, 88, 114, 142, 154, 180, 230), das den Aufbau zur Bewegung in einer zweiten Richtung hält;
Mittel zum Anbringen des zweiten biegbaren Elements; und
elektromagnetische Spulenmittel (52, 82, 158, 160, 174, 224, 226) zum Empfangen bzw. Aufnehmen eines Stroms, um ein magnetisches Feld zur Wechselwirkung mit einem magnetischen Feld der Permanentmagnetmittel zu erzeugen.

2. Optisches Scannermodul nach Anspruch 1, wobei die elektromagnetischen Spulenmittel (52, 82, 158, 160, 174, 224, 226) einen Wechselstromantriebsstrom empfangen, um ein magnetisches Feld zur Wechselwirkung mit dem magnetischen Feld des Permanentmagneten zu erzeugen, um Schwingungsbewegungen des optischen Elements in den ersten und zweiten Richtungen zu erzeugen, was in einer bidirektionalen Abtastbewegung des Lichtstrahls resultiert, wobei die ersten und zweiten Richtungen orthogonal zueinander in Beziehung stehen.

3. Optisches Scannermodul nach Anspruch 1 oder 2, wobei der Aufbau weiterhin einen Rahmen aufweist (62, 86, 106, 236), und wobei das erste biegbare Element ein verlängertes Bauteil (64, 90, 108, 130, 172, 250) mit gegenüberliegenden Enden ist, die an gegenüberliegenden Punkten auf den Rahmen befestigt sind, um das erste biegbare Element in einen gespannten Zustand zu plazieren.

4. Optisches Scannermodul nach Anspruch 3, wobei das optische Element und der Permanentmagnet (74, 94, 112, 178, 248) auf gegenüberliegenden Seiten des ersten biegbaren Elements (64, 90, 108, 130, 172, 250) an einem zentralen Ort zwischen den gegenüberliegenden Enden des ersten biegbaren Elements angebracht sind.

5. Optisches Scannermodul nach einem der vorangegangenen Ansprüche, wobei die Schwingungsbewegung des optischen Elements (72, 92, 110, 122, 163, 176, 246) in der ersten Richtung eine Rotationsbewegung um eine Achse ist, die durch das erste biegbare Element (64, 90, 108, 130, 162, 172, 250) definiert ist, wobei die Rotationsbewegung bzw. Drehbewegung in der ersten Richtung durch eine Torsionsbiegung des ersten biegbaren Elements bewirkt wird.

6. Optisches Scannermodul nach Anspruch 3, wobei der Aufbau auslegerarmartig durch ein einzelnes zweites biegbares Element (114) befestigt ist, das sich durch eine zentrale Öffnung der elektromagnetischen Spule erstreckt, und das ein freies Ende hat, das an dem Rahmen (106) befestigt ist.

7. Optisches Scannermodul nach Anspruch 3, wobei der Aufbau auslagerarmartig durch ein Paar erste biegbare Elemente (88) befestigt ist, die freie Enden haben, die am Rahmen (86) an Orten befestigt sind, die winkelmäßig gleichmäßig von den gegenüberliegenden Enden des ersten biegbaren Elements (90) beabstandet sind.

8. Optisches Scannermodul nach einem der vorangegangenen Ansprüche, wobei das optische Element ein Spiegel ist (72, 92, 110, 163, 176, 246).

9. Optisches Scannermodul nach einem der Ansprüche 1 bis 7, wobei das optische Element eine Linse (122) ist.

10. Optisches Scannermodul nach Anspruch 3, wobei die Mittel zum Befestigen des zweiten biegbaren Elements eine Basis (84) sind, und wobei das zweite biegbare Element (142) ein an der Basis befestigtes erstes Ende und am Rahmen (86) befestigtes zweites Ende aufweist.

11. Optisches Scannermodul nach Anspruch 3, wobei die Mittel zum Befestigen des zweiten biegbaren Elements eine Basis (84) sind, und wobei das zweite biegbare Element (142) aus einer Verlängerung des ersten biegbaren Elements (90) über den Rahmen (86) hinaus besteht.

12. Optisches Scannermodul nach Anspruch 10, wobei die elektromagnetische Spule eine erste elektromagnetische Spule (82) ist, wobei das optische Scannermodul weiterhin eine zweite elektromagnetische Spule (144) aufweist, die so positioniert ist, um eine magnetische Achse parallel zu einer magnetischen Achse des Permanentmagneten (94) und orthogonal zu einer magnetischen Achse der ersten elektromagnetischen Spule (82) zu etablieren, wobei die Erregung der zweiten elektromagnetischen Spule (144) mit einem Wechselstromantriebsstrom abwechselnd abstoßende und anziehende Kräfte auf die Anordnung erzeugt, um das optische Element (92) in der zweiten Richtung mit einer Biegung des zweiten biegbaren Elements (142) zu oszillieren bzw. zu schwingen.

13. Optisches Scannermodul nach Anspruch 3, wobei der Rahmen aus Federmaterial gebildet ist, was zum Dehnen des ersten biegbaren Elements in einen gespannten Zustand vorgespannt ist.

14. Optischer Scanner nach Anspruch 3, wobei die Mittel zum Befestigen des zweiten biegbaren Elements Mittel zum Strecken des zweiten biegbaren Elements in einem gespannten Zustand aufweisen, und eine Klammer oder Bügel (60) zum auslegerarmartigen Befestigen des Aufbaus an das zweite biegbare Element (64) aufweisen.

15. Optisches Scannermodul nach Anspruch 14, wobei die Mittel zum Befestigen des zweiten biegbaren Elements weiterhin ein Gegengewicht (68) aufweisen, das zum Ausgleichen des Gewichts des Aufbaus positioniert ist, um die Rotationsbewegung um eine Achse, die durch das zweite biegbare Element (64) definiert ist, zu minimieren, wobei die Schwingungsbewegung des optischen Elements (72) in der zweiten Richtung rotationsartig um die Achse ist, die durch das zweite biegbare Element (64) definiert ist, was durch torsionsartiges Biegen des zweiten biegbaren Elements aufgenommen wird.

16. Optisches Scannermodul nach Anspruch 3, wobei das optische Element eine Linse (122) ist, der Permanentmagnet ein Ringmagnet (126) ist, der die Linse umgibt und sie trägt, und wobei das erste biegbare Element ein Paar ausgerichteter biegbarer Elementabschnitte (130a, 130b) aufweist, die zwischen entsprechenden diametrisch gegenüberliegenden Punkten auf dem Ringmagneten und dem Rahmen (86) verbunden sind, wobei sich ein Weg für den Lichtstrahl durch die Linse durch eine zentrale Öffnung der elektromagnetischen Spule (82) hindurch erstreckt.

17. Optisches Scannermodul nach Anspruch 3, wobei der Permanentmagnet polarisiert ist, um eine magnetische Achse zu etablieren, die parallel zu einer der ersten und zweiten Richtungen orientiert ist.

18. Optisches Scannermodul nach Anspruch 5, wobei der Permanentmagnet (74) polarisiert ist, um eine magnetische Achse mit einem geneigten Winkel relativ zu sowohl der ersten als auch der zweiten Richtung zu etablieren.

19. Optisches Scannermodul nach Anspruch 1, wobei das Scannermodul durch folgendes charakterisiert ist:
einen ersten Permanentmagneten (164, 178, 248) zum Etablieren eines ersten magnetischen Feldes mit einer ersten magnetischen Achse; wobei das erste langgestreckte biegbare Element (162, 172, 150) das optische Element und den ersten Permanentmagneten an einem Ort zwischen den gegenüberliegenden Enden trägt;
Mittel zum Anbringen der gegenüberliegenden Enden des ersten biegbaren Elements (162, 172, 250);
einen zweiten Permanentmagneten (166, 186, 254) der durch die Befestigungsmittel angebracht ist und ein zweites magnetisches Feld mit einer zweiten magnetischen Achse etabliert; wobei das zweite biegbare Element (154, 180, 230) langgestreckt ist und fest angebrachte gegenüberliegende Enden hat, und zwar zum Anbringen der ersten Befestigungsmittel an einem Ort zwischen den gegenüberliegenden Enden;
und wobei die elektromagnetischen Spulenmittel (158, 160, 174, 224, 226) einen Wechselstromantriebsstrom empfangen, um ein drittes magnetisches Feld mit einer dritten magnetischen Achse zu etablieren, die orthogonal zu den ersten und zweiten magnetischen Achsen ist, wobei eine Wechselwirkung zwischen den ersten, zweiten und dritten Magnetfeldern Schwingungsbewegungen des optischen Elements in einer ersten Richtung um eine erste Achse herum erzeugt, die durch das erste biegbare Element definiert ist, und in einer zweiten Richtung um eine zweite Achse herum, die durch das zweite biegbare Element definiert ist, um eine bidirektionale Abtastbewegung des Lichtstrahls zu erzeugen.

20. Optischer Scanner nach Anspruch 19, wobei die elektromagnetischen Mittel erste und zweite elektromagnetische Spulen aufweisen, wobei die erste elektromagnetische Spule (158, 224) einen ersten Wechselstromantriebsstrom empfängt, um ein drittes magnetisches Feld zur Wechselwirkung mit dem ersten magnetischen Feld zu etablieren, um eine Schwingungsbewegung des optischen Elements in der ersten Richtung zu erzeugen, und wobei die zweite Spule (160, 226) einen zweiten Wechselstromantriebsstrom empfängt, um ein weiteres drittes Magnetfeld zur Wechselwirkung mit dem zweiten Magnetfeld zu etablieren, um eine Schwingungsbewegung des optischen Elements in der zweiten Richtung zu erzeugen.

21. Optisches Scannermodul nach Anspruch 20, wobei die Befestigungsmittel in der Form eines Zylinders (152) sind, der durch das zweite biegbare Element (154) innerhalb einer zentralen Öffnung der ersten und zweiten elektromagnetischen Spulen (158, 160) befestigt ist.

22. Optisches Scannermodul nach Anspruch 21, wobei die gegenüberliegenden Enden der zweiten biegbaren Elemente fest an ringförmigen Rollen befestigt sind, auf welchen die ersten und zweiten elektromagnetischen Spulen (158, 160) gewickelt sind.

23. Optisches Scannermodul nach einem der Ansprüche 20 bis 22, in welchem die elektromagnetischen Spulenmittel sich zwischen den ersten und zweiten Magneten befinden.

24. Optisches Scannermodul nach Anspruch 23, wobei die ersten Befestigungsmittel durch eine Spule vorgesehen sind, auf welcher eine Spule der elektromagnetischen Spulenmittel gewickelt ist.

25. Optisches Scannermodul nach Anspruch 24, wobei die zweiten Befestigungsmittel ein Rahmen zum festen Anbringen des zweiten Permanentmagneten und der Endteile des zweiten biegbaren Elements ist.

26. Optisches Scannermodul zum Richten eines Lichtstrahls in einem Muster, um ein kodiertes Symbol abzutasten, wobei das Scannermodul folgendes aufweist:
ein optisches Element (246) zum Richten des Lichtstrahles;
einen ersten Permanentmagneten (248) zum Etablieren eines ersten magnetischen Feldes;
einen Halter zum Halten des optischen Elements (246) und des ersten Permanentmagneten (248) in einem Rahmen;
ein erstes biegbares Element einschließlich eines Paares ausgerichteter erster (250) und zweiter (252) biegbarer Elementabschnitte, die entsprechend zwischen gegenüberliegenden Punkten auf dem Halter und dem Rahmen verbunden bzw. befestigt sind;
wobei die ersten und zweiten biegbaren Elementabschnitte selektiv unterschiedliche Torsionsbiegungseigenschaften haben; und
eine elektromagnetische Spule (224, 226) zum Empfangen eines Wechselstromantriebsstroms, um ein zweites magnetisches Feld zu etablieren, wobei eine Wechselwirkung der ersten und zweiten magnetischen Felder eine Schwingungsbewegung des optischen Elements erzeugt.

27. Optisches Scannermodul nach Anspruch 26, das weiterhin folgendes aufweist:
ein Paar langgestreckter zweiter biegbarer Elemente (230) die in paralleler, beabstandeter Beziehung angeordnet sind, und die entsprechende erste Enden haben, die in stationären Befestigungsmitteln verankert sind, und die entsprechende zweite Enden haben, die im Rahmen verankert sind;
einen zweiten Permanentmagneten (254), der am Rahmen in einer Position befestigt ist, um das optische Element (246) und den ersten Permanentmagneten (248) gewichtsmäßig auszugleichen, wobei der zweite Permanentmagnet ein drittes magnetisches Feld etabliert bzw. aufbaut, das mit dem zweiten magnetischen Feld wechselwirkt, um eine Schwingungsbewegung des optischen Elements in einer zweiten Richtung zu erzeugen, die orthogonal zur ersten Richtung ist, wie durch die Biegung der zweiten biegbaren Elemente aufgenommen, wobei dadurch eine bidirektionale Abtastung des Lichtstrahles vorgesehen wird.

28. Optisches Scannermodul nach Anspruch 26, wobei der Rahmen aus einem vorgespannten Federmaterial gebildet ist, um die ersten (250) und zweiten (252) biegbaren Elementabschnitte in gespannte Zustände zu strecken bzw. zu dehnen.

29. Optisches Scannermodul zum Richten eines Lichtstrahls in einem Muster, um ein kodiertes Symbol abzutasten, wobei das Scannermodul folgendes aufweist:
ein optisches Element (214) zum Richten des Lichtstrahles;
einen Permanentmagneten (216) zum Erzeugen eines ersten magnetischen Feldes;
ein langgestrecktes biegbares Element (212) mit gegenüberliegenden Enden zum Befestigen des optischen Elements und des Permanentmagneten an einem Ort zwischen den gegenüberliegenden Enden;
einen Zylinder (210) mit einem offenen Ende und einem geschlossenen Ende, wobei der Zylinder aus magnetisch permeablem bzw. durchlässigem Material gebildet ist, wobei die gegenüberliegenden Enden des biegbaren Elements am Zylinder so befestigt sind, daß das biegbare Element das offene Ende des Zylinders umspannt;
einen magnetischen Kern (206), der sich vom geschlossenen Ende zum offenen Ende des Zylinders hin erstreckt, um ein freies Ende nahe des Permanentmagneten darzustellen; und
eine Spule (204), die um den Kern (206) gewickelt ist, und zwar zum Empfangen eines Wechselstromantriebsstroms, um einen in den Zylinder und den Kern fließenden magnetischen Fluß und ein zweites magnetisches Feld in den Luftlücken zwischen dem freien Ende des Kerns und dem offenen Ende des Zylinders zu erzeugen, wobei die Wechselwirkung der ersten und zweiten magnetischen Felder eine Schwingungsbewegung des optischen Elements erzeugt, wenn sich das biegbare Element torsionsartig biegt, um eine Linienabtastbewegung des Lichstrahls zu erzeugen.

30. Optisches Scannermodul nach Anspruch 29, wobei das biegbare Element (212) am offenen Ende des Zylinders (210) in einem gespannten Zustand befestigt ist.

31. Optisches Scannermodul nach Anspruch 29 oder 30, welches weiterhin einen Abstandshaltering (215) aufweist, an welchen die gegenüberliegenden Enden des biegbaren Elements (212) fest angebracht sind, wobei der Ring am offenen Ende des Zylinders (210) befestigt ist.

32. Optisches Scannermodul nach Anspruch 31, wobei der Zylinder (210) weiterhin ein ringförmiges Polstück (211) aufweist, das sich radial nach innen vom offenen Ende des Zylinders aus erstreckt.

33. Ein in der Hand gehaltenes optisches Abtastsystem, das ein optisches Scannermodul eingearbeitet hat, wie in einem der vorangegangenen Ansprüche beansprucht.

## Revendications

1. Module de scanneur optique pour diriger un faisceau lumineux sur un motif afin de scanner un symbole de code à barres, le module de scanneur comprenant :
un ensemble comportant un élément optique de direction de faisceau lumineux (72, 92, 110, 122, 163, 176, 246), un moyen à aimant permanent (74, 94, 112, 126, 164, 178, 248), et un premier élément souple de torsion allongé (64, 90, 108, 130, 130a, 130b, 162, 172, 250), ayant des extrémités opposées, pour monter ledit élément optique et ledit moyen à aimant permanent en un emplacement intermédiaire entre lesdites extrémités opposées pour un déplacement dans une première direction ;
un second élément souple (56, 88, 114, 142, 154, 180, 230) montant l'ensemble pour un déplacement dans une seconde direction ;
un moyen pour monter ledit second élément souple ; et
un moyen à bobine électromagnétique (52, 82, 158, 160, 174, 224, 226) pour recevoir un courant afin de générer un champ magnétique pour une interaction avec le champ magnétique dudit moyen à aimant permanent.

2. Module de scanneur optique selon la revendication 1, dans lequel ledit moyen à bobine électromagnétique (52, 82, 158, 160, 174, 224, 226) reçoit un courant alternatif d'attaque pour générer un champ magnétique pour une interaction avec le champ magnétique de l'aimant permanent afin de produire des mouvements oscillatoires de l'élément optique dans la première et la seconde direction se traduisant par un mouvement de scannage bidirectionnel du faisceau lumineux, la première et la seconde direction étant en relation orthogonale.

3. Module de scanneur optique selon la revendication 1 ou la revendication 2, dans lequel l'ensemble comporte de plus un bâti (62, 86, 106, 236) et dans lequel le premier élément souple est un élément allongé (64, 90, 108, 130, 172, 250) ayant des extrémités opposées fixées à des points opposés sur le bâti pour placer le premier élément souple dans une condition tendue.

4. Module de scanneur optique selon la revendication 3, dans lequel l'élément optique et l'aimant permanent (74, 94, 112, 178, 248) sont montés sur des faces opposées du premier élément souple (64, 90, 108, 130, 172, 250) en un emplacement central entre les extrémités opposées du premier élément souple.

5. Module de scanneur optique selon l'une quelconque des revendications précédentes, dans lequel le mouvement oscillatoire de l'élément optique (72, 92, 110, 122, 163, 176, 246) dans la première direction est un mouvement de rotation autour d'un axe défini par le premier élément souple (64, 90, 108, 130, 162, 172, 250), le mouvement de rotation dans la première direction étant assuré par une flexion en torsion du premier élément souple.

6. Module de scanneur optique selon la revendication 3, dans lequel l'ensemble est monté en porte-à-faux par un second élément souple unique (114) s'étendant à travers une ouverture centrale de la bobine électromagnétique et comportant une extrémité libre fixée audit bâti (106).

7. Module de scanneur optique selon la revendication 3, dans lequel l'ensemble est monté en porte-à-faux par une paire desdits premiers éléments souples (88) ayant des extrémités libres fixées audit bâti (86) en des emplacements espacés de manière équi-angulaire à partir des extrémités opposées du premier élément souple (90).

8. Module de scanneur optique selon l'une quelconque des revendications précédentes, dans lequel l'élément optique est un miroir (72, 92, 110, 163, 176, 246).

9. Module de scanneur optique selon l'une quelconque des revendications 1 à 7, dans lequel l'élément optique est une lentille (122).

10. Module de scanneur optique selon la revendication 3, dans lequel le moyen pour monter le second élément souple est une base (84), et le second élément souple (142) comporte une première extrémité fixée à la base et une seconde extrémité fixée au bâti (86).

11. Module de scanneur optique selon la revendication 3, dans lequel le moyen pour monter le second élément souple est une base (84), et le second élément souple (142) est constitué par un prolongement du premier élément souple (90) au-delà du bâti (86).

12. Module de scanneur optique selon la revendication 10, dans lequel la bobine électromagnétique est une première bobine électromagnétique (82), le module de scanneur optique comportant de plus une seconde bobine électromagnétique (144) positionnée de manière à établir un axe magnétique parallèle à un axe magnétique de l'aimant permanent (94) et perpendiculaire à un axe magnétique de la première bobine électromagnétique (82), de telle manière que l'excitation de la seconde bobine électromagnétique (144) par un courant alternatif d'attaque produit des forces répulsives et attractives alternées sur ledit ensemble afin de faire osciller l'élément optique (92) dans la seconde direction avec une flexion du second élément souple (142).

13. Module de scanneur optique selon la revendication 3, dans lequel le bâti est formé de matière élastique sollicitée pour étirer le premier élément souple vers sa condition tendue.

14. Module de scanneur optique selon la revendication 3, dans lequel le moyen pour monter le second élément souple comporte un moyen pour étirer le second élément souple vers une condition tendue et comporte un support (60) pour monter en porte-à-faux l'ensemble sur le second élément souple (64).

15. Module de scanneur optique selon la revendication 14, dans lequel le moyen pour monter le second élément souple comporte de plus un contrepoids (68) positionné de manière à contrebalancer le poids de l'ensemble pour minimiser le mouvement de rotation autour d'un axe défini par le second élément souple (64), de manière que le mouvement oscillatoire de l'élément optique (72) dans la seconde direction soit une rotation autour de l'axe défini par le second élément souple (64) permise par une flexion en torsion du second élément souple.

16. Module de scanneur optique selon la revendication 3, dans lequel l'élément optique est une lentille (122), l'aimant permanent est un aimant annulaire (126) entourant et supportant ladite lentille, et le premier élément souple comporte une paire de sections d'éléments souples alignés (130a, 130b) reliées entre des points diamétralement opposés respectifs sur l'aimant annulaire et le bâti (86), un trajet pour le faisceau lumineux à travers la lentille s'étendant à travers une ouverture centrale de la bobine électromagnétique (82).

17. Module de scanneur optique selon la revendication 3, dans lequel l'aimant permanent est polarisé pour établir un axe magnétique orienté parallèlement à l'une de la première et de la seconde directions.

18. Module de scanneur optique selon la revendication 5, dans lequel l'aimant permanent (74) est polarisé pour établir un axe magnétique à un angle oblique par rapport à l'une et l'autre de la première et de la seconde directions.

19. Module de scanneur optique selon la revendication 1, le module de scanneur optique étant caractérisé par : un premier aimant permanent (164, 178, 248) pour établir un premier champ magnétique ayant un premier axe magnétique ; ledit premier élément souple allongé (162, 172, 150) supportant l'élément optique et le premier aimant permanent en un emplacement intermédiaire entre les extrémités opposées ; un moyen pour monter les extrémités opposées du premier élément souple (162, 172, 250) ; un second aimant permanent (166, 186, 254) monté par le moyen de montage et établissant un second champ magnétique ayant un second axe magnétique ; ledit second élément souple (154, 180, 230) étant allongé et ayant des extrémités opposées montées de façon fixe, pour monter le premier moyen de montage en un emplacement intermédiaire entre les extrémités opposées ; et ledit moyen à bobine électromagnétique (158, 160, 174, 224, 226) recevant un courant alternatif d'attaque pour établir un troisième champ magnétique ayant un troisième axe magnétique perpendiculaire au premier et second axes magnétiques, de manière que l'interaction du premier, du second et du troisième champs magnétiques génère des mouvements oscillatoires de l'élément optique dans une première direction autour d'un premier axe défini par le premier élément souple et dans une seconde direction autour d'un second axe défini par le second élément souple afin de produire un déplacement de scannage bidirectionnel du faisceau lumineux.

20. Module de scanneur optique selon la revendication 19, dans lequel le moyen électromagnétique comporte une première et une seconde bobines électromagnétiques, la première bobine électromagnétique (158, 224) recevant un courant alternatif d'attaque pour établir un troisième champ magnétique pour une interaction avec le premier champ magnétique afin de produire un mouvement oscillatoire de l'élément optique dans la première direction et la seconde bobine (160, 226) recevant un second courant alternatif d'attaque pour établir un autre troisième champ magnétique pour une interaction avec le second champ magnétique afin de produire un mouvement oscillatoire de l'élément optique dans la seconde direction.

21. Module de scanneur optique selon la revendication 20, dans lequel le moyen de montage se présente sous la forme d'un cylindre (152) monté par le second élément souple (154) à l'intérieur d'une ouverture centrale de la première et de la seconde bobine électromagnétique (158, 160).

22. Module de scanneur optique selon la revendication 21, dans lequel les extrémités opposées des seconds éléments souples sont montées de manière fixe sur des corps de bobines annulaires sur lesquels les première et seconde bobines électromagnétiques (158, 160) sont enroulées.

23. Module de scanneur optique selon l'une quelconque des revendications 20 à 22, dans lequel les moyens à bobines électromagnétiques sont situés entre le premier et le second aimants.

24. Module de scanneur optique selon la revendication 23, dans lequel le premier moyen de montage est fourni par un corps de bobine sur lequel une bobine du moyen à bobine électromagnétique est enroulée.

25. Module de scanneur optique selon la revendication 24, dans lequel le second moyen de montage est un bâti pour monter de manière fixe le second aimant permanent et les parties terminales du second élément souple.

26. Module de scanneur optique pour diriger un faisceau lumineux dans un motif afin de scanner un symbole encodé, le module de scanneur comprenant : un élément optique (246) pour diriger le faisceau lumineux ; un premier aimant permanent (248) pour établir un premier champ magnétique ; un support pour maintenir l'élément optique (246) et le premier aimant permanent (248) dans un bâti ; un premier élément souple comportant une paire de premières (250) et secondes (252) sections d'éléments souples alignées, respectivement connectées entre des points opposés sur le support et le bâti ; les premières et secondes sections d'éléments souples ayant des caractéristiques de flexion en torsion sélec tivement différentes, et une bobine électromagnétique (224, 226) pour recevoir un courant alternatif d'attaque afin d'établir un second champ magnétique, de manière que l'interaction du premier et du second champs magnétiques produise un mouvement oscillatoire de l'élément optique.

27. Module de scanneur optique selon la revendication 26, comprenant de plus : une paire de seconds éléments souples allongés (230) disposés parallèlement, en étant espacés l'un de l'autre et ayant des premières extrémités correspondantes ancrées sur des moyens de montage fixes et des secondes extrémités correspondantes ancrées sur le bâti ; un second aimant permanent (254) monté sur le bâti dans une position propre à contrebalancer l'élément optique (246) et le premier aimant permanent (248), le second aimant permanent établissant un troisième champ magnétique interagissant avec le second champ magnétique afin de produire un mouvement oscillatoire de l'élément optique dans une seconde direction perpendiculaire à la première direction, comme assuré par la flexion des seconds éléments souples, de manière à produire un scannage bidirectionnel du faisceau lumineux.

28. Module de scanneur optique selon la revendication 26, dans lequel le bâti est formé d'une matière élastique sollicitée pour étirer la première (250) et seconde (252) sections d'éléments souples vers des conditions tendues.

29. Module de scanneur optique pour diriger un faisceau lumineux dans un motif afin de scanner un symbole codé, le module de scanneur comprenant : un élément optique (214) pour diriger le faisceau lumineux ; un aimant permanent (216) pour produire un premier champ magnétique ; un élément souple allongé (212) ayant des extrémités opposées, pour monter l'élément optique et l'aimant permanent en un emplacement intermédiaire entre les extrémités opposées ; un cylindre (210) ayant une extrémité ouverte et une extrémité fermée, le cylindre étant formé de matière magnétiquement perméable, les extrémités opposées de l'élément souple étant fixées au cylindre de manière que le premier élément souple embrasse l'extrémité ouverte du cylindre ; un noyau magnétique (206) faisant saillie à partir de l'extrémité fermée vers l'extrémité ouverte du cylindre pour présenter une extrémité libre à proximité de l'aimant permanent ; et une bobine (204) enroulée autour du noyau (206) pour recevoir un courant alternatif d'attaque afin de produire un flux magnétique s'écoulant dans le cylindre et dans le noyau et un second champ magnétique dans des entrefers entre l'extrémité libre du noyau et l'extrémité ouverte du cylindre, si bien que l'interaction du premier et du second champs magnétiques génère un mouvement oscillatoire de l'élément optique lorsque l'élément souple fléchit en torsion pour produire un mouvement de scannage linéaire du faisceau lumineux.

30. Module de scanneur optique selon la revendication 29, dans lequel l'élément souple (212) est monté sur l'extrémité ouverte du cylindre (210) dans une condition tendue.

31. Module de scanneur optique selon la revendication 29 ou la revendication 30, comprenant de plus un anneau de montage avec écartement (215) auquel les extrémités opposées de l'élément souple (212) sont fixées à demeure, l'anneau étant fixé à l'extrémité ouverte du cylindre (210).

32. Module de scanneur optique selon la revendication 31, dans lequel le cylindre (210) comporte de plus une pièce polaire annulaire (211) orientée radialement vers l'intérieur à partir de l'extrémité ouverte du cylindre.

33. Système de scannage optique tenu à la main incorporant un module de scanneur optique tel que défini dans l'une quelconque des revendications précédentes.
